(19) Europäisches Patentamt / European Patent Office / Office européen des brevets

(11) **EP 4 094 942 A1**

(12) **EUROPEAN PATENT APPLICATION**

(43) Date of publication:
**30.11.2022  Bulletin 2022/48**

(21) Application number: **21175852.9**

(22) Date of filing: **26.05.2021**

(51) International Patent Classification (IPC):
**B33Y 70/00** (2020.01)      **B29C 64/00** (2017.01)
**C09D 11/101** (2014.01)      **C09D 11/30** (2014.01)

(52) Cooperative Patent Classification (CPC):
**C09D 11/101; B33Y 70/00; C09D 11/30**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **TIGER Coatings GmbH & Co. KG**
**4600 Wels (AT)**

(72) Inventor: **HOLZINGER, Dieter**
**4600 Wels (AT)**

(74) Representative: **SONN Patentanwälte OG**
**Riemergasse 14**
**1010 Wien (AT)**

(54) **RADIATION CURABLE COMPOSITION FOR ADDITIVE MANUFACTURING SUITABLE FOR ELECTRONIC APPLICATIONS**

(57)     The present invention relates to a radiation curable composition for use in additive manufacturing comprising one or more pre-polymers A with a number average molecular mass (Mn) of below 600 g/mol with at least two radically polymerizable, unsaturated groups per molecule in a concentration range of 25 wt% - 70 wt% with respect to the total weight of the composition, one or more epoxy-based pre-polymers B with a number average molecular mass (Mn) of at least 600 g/mol with at least two radically polymerizable, unsaturated groups per molecule in a concentration range of 25 wt% - 70 wt% with respect to the total weight of the composition, one or more pre-polymers C with one radically polymerizable, unsaturated group per molecule in a concentration of below 25 wt% with respect to the total weight of the composition, one or more photoinitiators in a concentration range of 0.1 wt% - 10 wt% with respect to the total weight of the composition and optionally further compounds, wherein the weight of the pre-polymers per mol of radically polymerizable unsaturated groups ($WPU_p$) is from 100 to 500 g/mol.

Further, an object comprising such composition in a cured state and a use of such composition in an additive manufacturing process is provided.

EP 4 094 942 A1

## Description

-Technical Field-

The present invention relates to the field of additive manufacturing, also known as rapid prototyping or 3D printing, and is particularly directed to a radiation curable composition for use in additive manufacturing. The present invention further relates to an object comprising said composition in a cured state and to the use of said composition.

-Background-

Various technologies and processes to create polymeric, 3D printed objects are existing by now. Some of these processes exclusively use solid printing compositions, e.g. filaments, such as fused filament fabrication (FFF), or granular/powdery printing compositions, such as selective laser sintering (SLS), selective heat sintering (SHS), fused granular fabrication or electrographic methods; some others use liquid compositions, such as stereolithography (SLA), hot lithography (HL) and ink-jet 3D printing. Further, mixed processes using liquid (e.g. ink) and solid compositions (e.g. filaments and/or granular/powdery) are existing, such as high-speed sintering (HSS), binder jetting (BJ), composite based additive manufacturing (CBAM) and multi jet fusion (MJF). Both thermoplastic and thermosetting compositions, or even mixtures thereof, may in principle be employed as printing compositions.

Typically, the 3D printed objects are produced by applying the liquid and/or solid 3D printing composition layer by layer, wherein each layer corresponds to a cross-section of said 3D object, the printed layers, in case of thermosetting compositions, being fully cured, partially cured or not cured at all between successive deposits of these layers. The radiation curable composition according to the present invention is suitable to be processed in many of the methods mentioned above, without any limitation to these. Preferably, said composition is processed in SLA or ink-jet 3D printing processes.

In SLA, an object is obtained by selectively curing a composition layer by layer using an ultraviolet laser beam. The compositions used in SLA typically are photosensitive, curable monomers, oligomers and/or polymers that are processed in liquid form.

3D inkjet printing typically is a low-pressure process that is carried out at ambient temperature and involves the deposition of liquid compositions, such as an ink. In such processes, the printing composition (e.g.: an ink) is ejected through small nozzles within a print head to build multiple layers in a layer by layer process. Mostly, inkjet 3D printing systems include equipment configured for curing each layer between successive depositions. Usually, the deposited layers are very thin (e.g. from 0.025 mm to 0.1 mm) and thus, can be cured quickly, by short exposure to radiation, such as by exposure to infrared (IR), visible (VIS), and/or ultraviolet (UV) light. Most often, UV radiation is employed in inkjet 3D-printing processes.

The radiation curable composition according to present invention may be used in various methods, systems, and apparatuses for inkjet additive manufacturing as for example disclosed in the following publications, without any limitation to these: US8609204B2, EP3322577A1, EP3166774A1, US10688715B2, US20210008793A1 and WO2020035456A1.

In the following, a short overview of the relevant state-of-the-art is given:

WO2019025717A1 relates to a photopolymerizable composition comprising at least a photopolymerizable resin, a photosensitizer, an annihilator; and a photoinitiator. In particular, the photopolymerizable resin can comprise i) monomers, oligomers or polymers which can be polymerized and/or crosslinked by radical means or by addition mechanisms, such as acrylated monomers or oligomers, methacrylated polymers, vinyl compounds and mixtures thereof and ii) cationically polymerizable and/or crosslinkable monomers, oligomers and polymers, for example epoxy resins such as monomeric epoxides and polymeric epoxides having one or more epoxy groups, vinyl ethers, cyanate esters, etc. and mixtures thereof. Further, the use of such compositions for additive manufacturing, such as for three-dimensional photolithography techniques, is disclosed.

WO2019071071A1 relates to an ink for use in a three-dimensional printing system comprising 10-70 wt. % cyclopolymerizable monomer, based on the total weight of the ink, wherein the cyclopolymerizable monomer comprises a first ethenyl or ethynyl moiety and a second ethenyl or ethynyl moiety, and wherein the $\alpha$-carbon of the first ethenyl or ethynyl moiety and the $\alpha$-carbon of the second ethenyl or ethynyl moiety have a 1,5-, 1,6-, 1,7-, or 1,8-relationship. In a particular embodiment the ink further comprises 10-60 wt. % oligomeric curable material; and up to 80 wt. % additional monomeric curable material, based on the total weight of the ink. Said oligomeric curable material may comprise a polyester (meth)acrylate oligomer, a urethane (meth)acrylate oligomer, or an epoxy(meth)acrylate oligomer. The weight average molecular weight of an oligomeric curable material can generally be in the range from about 400 to 10,000. The additional monomeric curable material may comprise one or more species of (meth)acrylates, such as one or more monofunctional and/or polyfunctional (meth)acrylates. Further, the ink may also comprise a photoinitiator in an amount of up to 5 wt %, based on the total weight of the ink.

EP3371263B1 relates to an ink for use in a three-dimensional printing system comprising 10-60 wt. % oligomeric curable material; 30-80 wt. % monomeric curable material; and 10-35 wt. % self-curable light-sensitive oligomer, based on the total weight of the ink, wherein the self-curable light-sensitive oligomer comprises one or more labile moieties and wherein the ink when cured has a cytotoxicity grade below 2 when measured according to ANSI/AAMI/ISO 10993-5:2009. The oligomeric curable material may comprise a urethane (meth)acrylate oligomer, a polyester (meth)acrylate oligomer, an epoxy (meth)acrylate oligomer, or a combination thereof. Further, the monomeric curable material may comprise a monofunctional (meth)acrylate, a difunctional (meth)acrylate, a trifunctional (meth)acrylate, a tetrafunctional (meth)acrylate, a pentafunctional (meth)acrylate, or a combination thereof. Additionally, the ink may comprise a photoinitiator. Such inks have certain biocompatibility.

WO2020136654A1 relates to a formulation usable in additive manufacturing of a three-dimensional object, the formulation comprising silica particles in an amount of from 10 to 30 %, or from 15 to 20 %, by weight, a first multifunctional curable material in an amount of from 10 to 30 %, or from 15 to 20 %, by weight, said first multi-functional curable material having a molecular weight of from 300 gram/mol to 1,000 gram/mol; a second multi-functional curable material in an amount of from 10 to 30 %, by weight, said second multi-functional curable material having a molecular weight lower than 1,000 gram/mol; and a monofunctional curable material having a molecular weight of no more than 300 gram/mol, in an amount of from 10 to 50 % by weight. According to some of the disclosed embodiments, the additive manufacturing is 3D inkjet printing.

Further related disclosures may also be found in EP0822445A1, US20180320008A1, David Bird et al., The Minerals, Metals & Materials Society 2019, KR20200128598A and WO2020081791A1.

Nevertheless, there is a need for improved radiation curable compositions that may be processed by an additive manufacturing process resulting in at least partially 3D-printed objects comprising such 3D printed, cured compositions or also objects consisting of such 3D printed cured compositions, with improved properties, in particular improved electrical, thermal, mechanical and biological properties.

The object of the present invention is thus to provide a radiation curable composition that is suitable to be processed via an additive manufacturing process, in particular via a 3D ink-jet printing process or an SLA 3D printing process; the cured composition featuring improved properties, in particular: high temperature resistance, in particular a glass transition temperature (Tg) of at least 100 °C and/or a heat deflection temperature (HDT-A) of at least 80 °C, and/or good electrical insulation properties, in particular a breakdown voltage of at least 40 kV/mm, and/or good chemical resistance, in particular towards alkaline, acidic and/or alcoholic media. In addition, suitable mechanical (e.g. tensile) properties for various applications, in particular a tensile modulus of greater than 2 GPa and/or a stress at break of greater than 20 MPa of the cured composition, are desired. Also, for certain applications, in particular for *in-vivo* applications such as in the field of *in-vivo* sensors, good biocompatibility of the cured composition is desired.

Fulfillment of one or more of the above mentioned properties of the cured composition enables the composition to be widely used for different industrial applications, such as for 3D printing of electronical components, in particular for circuit board manufacturing. Circuit boards, in particular specific parts thereof, require a high glass transition temperature of at least 100 °C of the cured composition to withstand elevated temperatures in order to minimize or even avoid deformation under these conditions and/or a break down voltage of at least 40 kV/mm in order to minimize the risk of or even avoid short circuits. Further, the cured composition can be used for sensor technology, in particular for *in-vivo* sensors. *In-vivo* sensors require certain biocompatibility to avoid, or at least minimize, damaging of certain human and animal organisms and cells.

-Brief description of the invention-

It has now surprisingly been found that one or more of the above described objects, properties and needs can be fulfilled, or at least be improved, by a radiation curable composition for use in additive manufacturing as specified in claim 1; said composition comprising one or more pre-polymers A with a number average molecular mass (Mn) of below 600 g/mol with at least two radically polymerizable, unsaturated groups per molecule, the one or more pre-polymers A being present in a concentration range of 25 wt% - 70 wt% with respect to the total weight of the composition; the composition further comprises one or more epoxy-based pre-polymers B with a number average molecular mass (Mn) of at least 600 g/mol with at least two radically polymerizable, unsaturated groups per molecule, the one or more epoxy-based pre-polymers B being present in a concentration range of 25 wt% - 70 wt% with respect to the total weight of the composition; and optionally one or more pre-polymers C with one radically polymerizable, unsaturated group per molecule, the one or more pre-polymers C being present in a concentration of below 25 wt% with respect to the total weight of the composition; in addition, said composition comprises one or more photoinitiators in a concentration range of 0.1 wt% - 10 wt% with respect to the total weight of the composition and optionally further compounds; the weight of the pre-polymers per mol of radically polymerizable unsaturated groups ($WPU_p$) is from 100 to 500 g/mol.

Further, an at least partially 3D printed object comprising said composition in a cured state (or in other words: said cured composition), is provided.

Further, a method of manufacturing an object comprising the at least partially cured composition via an additive manufacturing process is provided.

Finally, a use of said composition in an additive manufacturing process, preferably an ink-jet additive manufacturing process or an SLA additive manufacturing process is provided.

Preferred embodiments of the present invention are provided in the dependent claims and the description.

-Detailed description of the invention-

As previously described, the radiation curable composition for use in additive manufacturing comprises one or more pre-polymers A with a number average molecular mass (Mn) of below 600 g/mol with at least two radically polymerizable, unsaturated groups per molecule, the one or more pre-polymers A being present in a concentration range of 25 wt% - 70 wt% with respect to the total weight of the composition, one or more epoxy-based pre-polymers B with a number average molecular mass (Mn) of at least 600 g/mol with at least two radically polymerizable, unsaturated groups per molecule, the one or more pre-polymers B being present in a concentration range of 25 wt% - 70 wt % with respect to the total weight of the composition, optionally one or more pre-polymers C with one radically polymerizable, unsaturated group per molecule, the one or more pre-polymers C being present in a concentration of below 25 wt% with respect to the total weight of the composition, one or more photoinitiators in a concentration range of 0.1 wt% - 10 wt% with respect to the total weight of the composition and optionally further compounds, wherein the weight of the pre-polymers per mol of radically polymerizable unsaturated groups ($WPU_p$) is from 100 to 500 g/mol.

The composition according to the present invention is suitable to be processed via an additive manufacturing process, in particular an SLA or inkjet additive manufacturing process. The cured composition may feature high temperature resistance, in particular a glass transition temperature (Tg) of at least 100 °C and/or a heat deflection temperature (HDT-A) of at least 80 °C. This/these favorable property(ies) may be achieved by a high crosslinking density of the cured composition. An important factor influencing the crosslinking density was found to be the content of pre-polymer(s) C, which according to the present invention is chosen to be below 25 wt%. Further improvement of said property(ies) could surprisingly be realized by decreasing the amount of pre-polymer(s) C even further, in particular to a content of below 10 wt%, preferably below 5 wt% and more preferably below 3 wt% with respect to the total weight of the composition. By doing so, Tg values of at least 140 °C and/or HDT-A values of at least 100 °C of the cured composition could be achieved. In certain embodiments, the composition may even be free from pre-polymer(s) C or comprise such pre-polymer(s) C in an amount of at least 0.01 wt% up to below 25 wt%, preferably up to 10 wt% and more preferably up to 5 wt%, yet more preferably up to 3 wt% and most preferably up to 1 wt% with respect to the total weight of the composition. "Free from pre-polymer(s) C" is understood to include small amounts of pre-polymer(s) C which were not intentionally added.

Typically, the crosslinking density of the cured composition increases by decreasing the content of prepolymer(s) C. Of course, also other factors, such as the number of functional groups per molecule of other pre-polymers (e.g. A and/or B) and/or the molecular weights of such pre-polymers, as well as the curing efficiency, may influence the crosslinking density of the cured composition. Surprisingly, it was found that by choosing the weight of the pre-polymers (A, B, optionally C and any further pre-polymers if present) per mol of radically polymerizable unsaturated groups ($WPU_p$) from 100 to 500 g/mol an ideal crosslinking density and thus a well-balanced set of properties of the cured compositions was achieved; a $WPU_p$ from 100 to 200 g/mol was found to be particularly preferable. Nevertheless, the crosslinking density should not be too high, as this may cause the cured composition to be brittle and inflexible. Such issues were observed when $WPU_p$ was below 100 g/mol.

An ideal crosslinking density which may be achieved by a weight of the pre-polymers (A, B, optionally C and any further pre-polymers if present) per mol of radically polymerizable unsaturated groups ($WPU_p$) from 100 to 500 g/mol leads to good chemical resistance, in particular towards alkaline, acidic and/or alcoholic media. On the one hand, said ideal crosslinking density causes a tight enough polymeric network which hinders small molecules to penetrate into the cured composition and cause any kind of chemical degradation, such as bond cleavage or oxidation. On the other hand, a polymeric network with said ideal crosslinking density has many crosslinking points and is thus more slowly degraded by undesired chemical reactions, such as bond cleavage e.g. by hydrolysis. In principle, these positive effects further increase with decreasing $WPU_p$ of the composition, however, at a certain limit which was surprisingly found to be below a $WPU_p$ of 100 g/mol, the cured composition becomes very brittle as a result of deteriorated flexibility as caused by a too high crosslinking density.

Additionally, it was found, that a low content of pre-polymer(s) C results in good biocompatibility. In such embodiments, the composition may even be free from pre-polymer(s) C or comprise them in an amount of at least 0.01 wt% up to below 25 wt%, preferably up to 10 wt%, more preferably up to 5 wt%, yet more preferably up to 3 wt% and most preferably up to 1 wt% with respect to the total weight of the composition. Without being bound to theory it is believed that the biocompatibility is improved by decreasing the content of prepolymer(s) C as thereby the migration of non-polymerized pre-polymers from the cured composition is reduced under *in-vivo* conditions, e.g. in aqueous media.

This effect is believed to be observed as pre-polymers comprising at least two unsaturated, radically polymerizable groups per molecule are more likely to be incorporated into the polymeric network in the course of the curing process for purely statistical matters; thus their tendency for migration is reduced as compared to pre-polymer(s) C having only one radically polymerizable, unsaturated group.

Further it was surprisingly found that compositions according to the present invention result in cured compositions with a high break down voltage of at least 40 kV/mm; even more surprisingly break down voltages of above 100 kV/mm could be achieved. The presence of epoxy- based prepolymer(s) B was found to be an important factor in order to achieve this property.

**[Pre-polymer A]**

As outlined above, the radiation curable composition according to the present invention comprises one or more pre-polymer(s) A. The number average molecular mass (Mn) of the one or more pre- polymer(s) A is below 600 g/mol, preferably below 500 g/mol, more preferably below 400 g/mol, even more preferably below 300 g/mol, yet more preferably below 250 g/mol, even more preferably below 220 g/mol, e.g. 210 or 200 g/mol and most preferably below 200 g/mol, e.g. 186 g/mol. Further, it is preferred that the one or more pre-polymer(s) A have a Mn of at least 100 g/mol, preferably of at least 150 g/mol. In certain embodiments, the viscosity of the one or more pre-polymer(s) A is below 10 mPas, more preferably below 5 mPas and yet more preferably below 4 mPas as measured at 25 °C. Use of such low viscosity pre-polymer(s) A is particularly desirable in case low viscosity compositions are desired, which is often the case in inkjet 3D printing applications in order to match the individual specifications of the respective printheads (e.g.: piezo-electrical printheads). The one or more pre-polymer(s) A comprise at least two radically polymerizable, unsaturated groups per molecule, whereby preferably the functionality is two (= difunctional), three (= trifunctional) or four (= tetrafunctional), yet preferably two. Pre-polymer(s) A having a functionality of higher than two (for example a functionality of three or four) tend to cause higher shrinkage upon curing due to an increased number of cross-linking reactions in the course of the curing process. According to a particularly preferred embodiment, the radically polymerizable, unsaturated groups of the one or more pre-polymer(s) A are selected from the group consisting of vinyl groups, allyl groups, (meth)acrylate groups and mixtures thereof, whereas vinyl and/or acrylate groups are particularly preferred. According to a further preferred embodiment, the one or more pre-polymer(s) A comprise at least one (meth)acrylate group and at least one vinyl group per molecule, preferably at least one acrylate and at least one vinyl group per molecule, whereby preferably the functionality is two, three or four, yet preferably two. In case the one or more pre-polymer(s) A comprise at least one (meth)acrylate group and at least one vinyl group per molecule, the prepolymer(s) show(s) on the one hand excellent dilution performance and on the other hand high performance in the polymerization reaction since the vinyl group tends to be less inhibited by molecular oxygen and the (meth)acrylate group tends to be less inhibited by moisture. Further, it has been shown that pre-polymer(s) A comprising at least one (meth)acrylate group and at least one vinyl group per molecule and are present in the amounts specified above exhibit relatively low shrinkage upon curing despite its functionality of two as for example compared to poly(meth)acrylates e.g. di- or tri(meth)acrylates. Even further, such compounds tend to have low viscosities (e.g. of below 4 mPas at 25 °C) which may be beneficial for certain applications, in particular in case low viscosity compositions are desired, which is typically the case for inkjet 3D printing applications. The use of such compounds in such amounts enables to still keep the viscosity of the composition relatively low despite adding even high concentrations of high-molecular weight compounds (e.g. up to 70 wt% oligomeric compounds as for example pre-polymer B or any other oligomeric pre-polymer(s) with respect to the total weight of the composition) to the composition according to the present invention; this favorable property is sometimes referred to as a high cutting power. Finally, by use of such compounds in the herein specified amounts, the crosslinking density of the cured compositions tends to be increased as a result of the high yield in the polymerization reaction and thus Tg, HDT, the mechanical properties and/or the chemical resistance of the cured compositions may be increased.

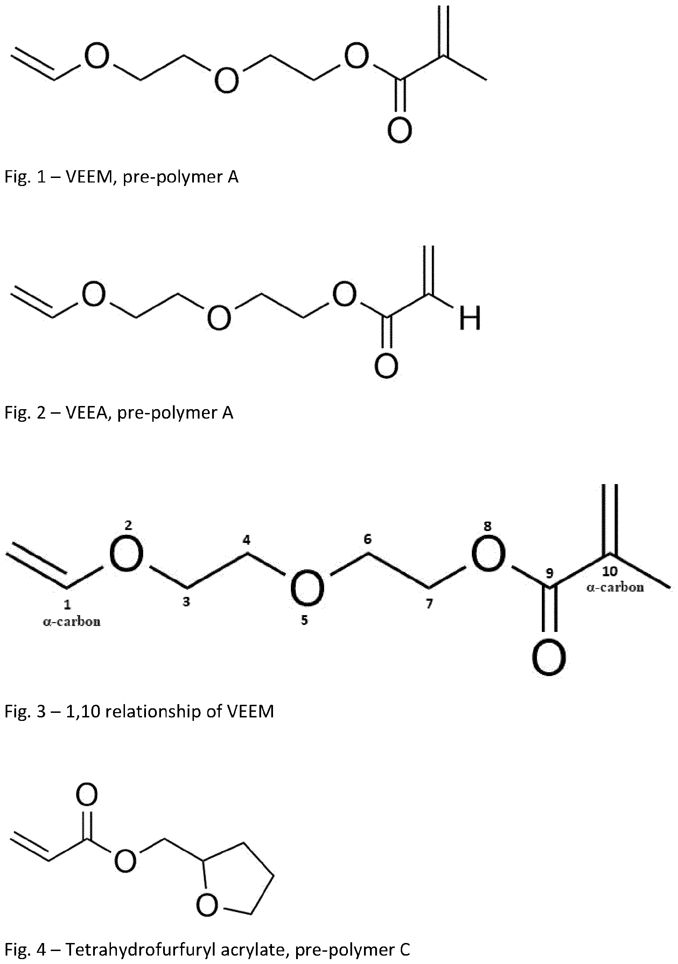

According to a particularly preferred embodiment, the one or more pre-polymer(s) A comprise 2-(2-vinyloxyethoxy)ethyl(meth)acrylate (VEEA/VEEM) as shown in Figure 1 and Figure 2, whereby 2-(2-vinyloxyethoxy)ethylacrylate (VEEA) is particularly preferred.

Apart from that, it may also be beneficial if the at least two radically polymerizable, unsaturated groups per molecule of the one or more pre-polymer(s) A have at least a 1,9 relationship (a-carbon to $\alpha$-carbon), for example a 1,10 relationship ($\alpha$-carbon to $\alpha$-carbon), wherein the $\alpha$-carbons denote the less substituted atoms of the respective unsaturated, radically polymerizable group, which in case of vinyl, (meth)acrylate and allyl groups is the inner (*endo*) carbon atom of the radically polymerizable double bond, as further illustrated in Figure 3. Such compounds tend to polymerize in a linear manner.

Without being bound to theory, it was found that pre-polymers with radically polymerizable groups having a relationship of 1,8 or below tend to cyclo-polymerize, at least to a certain extent, which may lead to deteriorated mechanical properties, deteriorated chemical stability, lower glass transition temperature (Tg) and/or heat deflection temperature of the cured composition, since cyclopolymerization may lead to a lower crosslinking density. Preferably compounds with a relationship of the polymerizable groups as described above from 1,9 to 1,15, more preferably 1,9 to 1,14 and most preferably 1,9 to 1,12 are employed, e.g. 1,10 to 1,12.

According to a further preference, the one or more pre-polymer(s) A comprise and preferably consist of aliphatic pre-polymer(s). The use of aliphatic pre-polymer(s) A may improve the flexibility as well as the break down voltage of the cured composition.

According to another preferred embodiment, the one or more pre-polymer(s) A are monomeric compounds, which is particularly beneficial to simply adjust the desired viscosity of the composition according to the present invention, which is particularly relevant for inkjet 3D-printing processes. The desired viscosity of the composition strongly depends on the employed printhead and the respective operation temperature and needs to be adjusted for each individual composition and application.

As previously mentioned, the one or more pre-polymer(s) A account for 25 to 70 wt%, preferably 30 to 70 wt%, more preferably 35 to 70 wt%, even more preferably 40 to 70 wt% and most preferably 45 to 70 wt%. with respect to the total weight of the composition. Yet in certain other embodiments, preferably, the pre-polymer(s) A account for 30 to 60 wt% and more preferably 40 to 50 wt%, e.g. 47 or 48 wt% with respect to the total weight of the composition.

In certain other embodiments, the pre-polymer(s) A account for 50 to 70 wt%, preferably 55 to 70 wt% and more preferably 60 to 70 wt% with respect to the total weight of the composition.

Suitable commercially available compounds that may exemplary be employed as pre-polymer A, alone or in combination, are VEEA (2-(2-Vinyloxyethoxy)ethyl acrylate) (e.g. available from NIPPON SHOKUBAI (Japan), Mn= 186 g/mol, difunctional), VEEM (2-(2-Vinyloxyethoxy)ethyl methacrylate) (e.g. available from NIPPON SHOKUBAI (Japan), Mn= 200 g/mol, difunctional), SR295 (SARTOMER (US), Mn=352.4 g/mol, tetrafunctional), SR351 (SARTOMER (US), Mn=296.3 g/mol, trifunctional), MIRAMER M340E (MIWON (South Korea), Mn=298g/mol, mixture of tri- and tetrafunctional compounds).

**[Epoxy based pre-polymer B]**

As outlined above, the radiation curable composition according to the present invention comprises one or more epoxy-based pre-polymer(s) B. The number average molecular mass (Mn) of the epoxy-based pre-polymer B is at least 600 g/mol. In certain embodiments Mn preferably is at least 700 g/mol, more preferably at least 750 g/mol, more preferably at least 800 g/mol. In certain other embodiments, the number average molecular mass (Mn) of epoxy-based pre-polymer B is at most 950 g/mol, preferably at most 1000 g/mol, more preferably at most 1200 g/mol and most preferably at most 1400 g/mol. So, in specific embodiments, Mn of the one or more pre-polymer(s) B is at least 600 g/mol but at most 1400 g/mol; e.g.: 600-1200 or 600-1000 or 700-1200 or 700-1000 g/mol. The one or more pre-polymer(s) B with the number average molecular mass (Mn) as specified above comprise at least two radically polymerizable, unsaturated groups per molecule, whereby preferably the functionality is two, three or four, yet more preferably two. Pre-polymer(s) B having a functionality of higher than two (for example a functionality of three or four) tend to cause higher shrinkage upon curing due to an increased number of cross-linking reactions in the course of the curing process. The radically polymerizable, unsaturated groups of pre-polymer(s) B are preferably selected from the group consisting of vinyl groups, allyl groups, (meth)acrylate groups and mixtures thereof, whereby vinyl and acrylate groups are particularly preferred. According to a preferred embodiment the one or more epoxy-based pre-polymers B comprise at least two (meth)acrylate groups per molecule, whereby preferably the functionality is two, three or four, yet preferably two. It is particularly preferred if the one or more epoxy-based pre-polymers B comprise at least two acrylate groups per molecule, whereby preferably the functionality is two, three or four, yet preferably two.

Epoxy-based pre-polymers B as described above typically have excellent mechanical properties, which typically has a positive effect on the mechanical properties of the cured composition. Preferably used are epoxy-based pre-polymers B that have a tensile modulus of higher than 1400 MPa, preferably higher than 1600 MPa, more preferably higher than 1800 MPa, even more preferably higher than 2000 MPa, a tensile strength of higher than 30 MPa and more preferably higher than 40 MPa and/or a glass transition temperature above 50 °C, preferably above 70 °C, more preferably above 90 °C, most preferably above 100 °C.

It may also be beneficial if the at least two radically polymerizable, unsaturated groups per molecule of the one or more epoxy-based pre-polymer(s) B have at least a 1,9 relationship for the same reasons as described previously for pre-polymer(s) A.

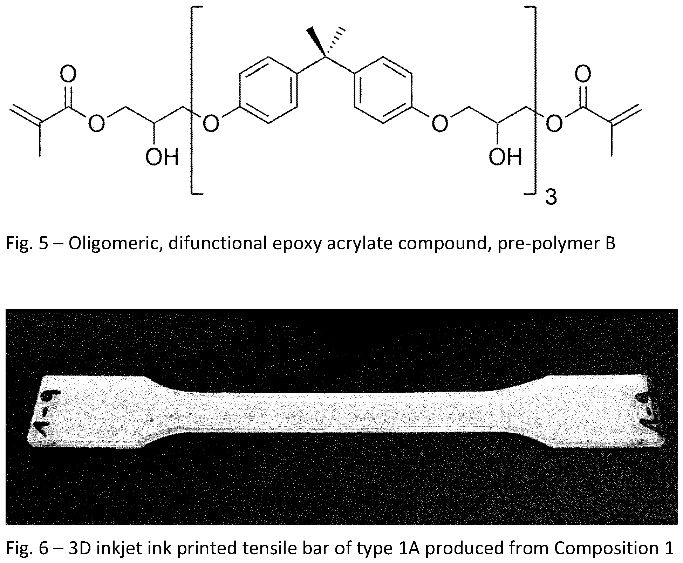

According to a particularly preferred embodiment, the one or more epoxy-based pre-polymer(s) B comprise at least one bisphenol structural unit, in particular at least one bisphenol A, F, and/or S structural unit. Typically, such compounds further comprise at least one ether linkage and vicinal thereto at least one hydroxyl (OH) group or a derivative thereof. Often, such compounds may be obtained as reaction products of respective bisphenols with epoxy-functional compounds, such as epichlorohydrin. Such compounds may be further functionalized with unsaturated, radically polymerizable groups in order to obtain epoxy-based pre-polymers B. Alternatively, the epoxy-functional compound that is brought to reaction with the respective bisphenol compound may already comprise at least one radically polymerizable, unsaturated group. Such an epoxy-based prepolymer is exemplary illustrated in Figure 5.

According to a further particularly preferred embodiment, the one or more epoxy-based prepolymer(s) B are free from non-reacted, residual epoxy (oxirane) groups.

According to a particular preferred embodiment, the one or more epoxy-based prepolymer(s) B comprise less than 2 %, preferably less than 1 % of non-reacted, residual epoxy (oxirane) groups.

The pre-polymer(s) B account for 25 to 70 wt%, preferably 30 to 70 wt%, more preferably 35 to 70 wt% and most preferably 40 to 70 wt% with respect to the total weight of the composition. Yet in other embodiments, preferably, the pre-polymer(s) B account(s) for 30 to 60 wt%, preferably 35 to 55 wt%, e.g. 43 or 47 wt% with respect to the total weight of the composition.

In another preferred embodiment, the epoxy-based pre-polymer(s) B account for 45 to 70 wt%, more preferably 50 to 70 wt%, yet even more preferably 55 to 70 wt% and most preferably 60 to 70 wt% with respect to the total weight of the composition.

Suitable commercially available compounds that may exemplary be employed as epoxy-based pre-polymer B, alone or in combination, are CN104 (SARTOMER (US), Mn= 900 g/mol, difunctional, oligomer), GENOMER 2280 (RAHN, Switzerland), GENOMER 2281 (RAHN, Switzerland).

In certain embodiments, the sum of the one or more pre-polymer(s) A and the one or more epoxy-based pre-polymer(s) B accounts for at least 60 wt%, preferably at least 70 wt%, more preferably at least 75 wt%, more preferably at least 80 wt%, more preferably at least 85 wt%, most preferably at least 90 wt%, for example at least 91 wt% or at least 94 wt% with respect to the total weight of the composition.

In another preferred embodiment, the sum of the one or more pre-polymer(s) A und the one or more epoxy-based pre-polymer(s) B accounts for at least 95 wt% with respect to the total weight of the composition. Such embodiments allow for simple adjustment of the desired viscosity, which is particularly relevant for inkjet 3D-printing processes. The desired viscosity of the composition strongly depends on the employed printhead and the respective operation temperature and needs to be adjusted for each individual composition and application. In addition, such embodiments result in cured compositions with ideal crosslinking density which typically leads to improved mechanical, thermal and chemical properties as previously described.

**[Pre-polymer C]**

As outlined above, the radiation curable composition according to the present invention may optionally further comprise one or more pre-polymer(s) C with one radically polymerizable, unsaturated group per molecule, the one or more pre-polymers C being present in a concentration of below 25 wt% with respect to the total weight of the composition. The number average molecular mass (Mn) of the one or more pre-polymer(s) C preferably is below 600, more preferably below 400 g/mol, yet more preferably below 300 g/mol, even more preferably below 250 g/mol, yet even more preferably below 220 g/mol and most preferably below 200 g/mol, e.g. 192 g/mol or 156 g/mol. Further, it is preferred to use prepolymer(s) C with Mn of at least 100 g/mol, preferably at least 150 g/mol. So, in specific embodiments, Mn of the one or more pre-polymer(s) C is from 100 g/mol to 600 g/mol; e.g.: 100-400 or 100-300 or 100-200 or 130-200 g/mol. An illustrative example for a compound that may be employed as pre-polymer C is shown in Figure 4.

In certain embodiments, the viscosity of the one or more pre-polymer(s) C is below 15 mPas, more preferably below 10 mPas and yet more preferably below 5 mPas as measured at 25 °C. The one or more pre-polymer(s) C comprise one radically polymerizable, unsaturated group per molecule, and thus have a functionality of one; or in other words are monofunctional. The radically polymerizable, unsaturated group of pre-polymer(s) C is preferably selected from the group consisting of vinyl groups, allyl groups, and (meth)acrylate groups and mixtures thereof, whereby vinyl and acrylate groups are particularly preferred. According to a particular preferred embodiment, the one or more pre-polymer(s) C are monomeric compounds. The usage of the one or more pre-polymer(s) C in the above-mentioned amounts typically leads to a reduced viscosity of the overall radiation curable composition due to the low viscosity of such compounds and further to reduced shrinkage upon printing/curing as less crosslinking reactions occur during the curing of the composition with increasing amount of the one or more prepolymer(s) C. The amount of pre-polymer(s) C within the composition should not be chosen too high (>= 25 wt%) as with higher amounts an insufficient crosslinking density upon curing may be obtained.

The one or more pre-polymer(s) C account for below 25 wt%, preferably below 20 wt%, more preferably below 10 wt% and yet preferably below 5 wt%, yet even more preferably below 3 wt% and most preferably below 1 wt% with respect to the total weight of the composition. Yet, in certain embodiments, the composition is free of any pre-polymer(s) C or contains such pre-polymer(s) C in an amount from 0.01 to below 25 wt%, preferably 20 wt%, more preferably 10 wt% and yet preferably 5 wt%, yet even more preferably 3 wt% and most preferably 1 wt% with respect to the total weight of the composition. Suitable, commercially available compounds that may exemplary be employed as pre-polymer C, alone or in combination, are SR285 (SARTOMER (US), Mn=156 g/mol, monofunctional monomer), SR339C (SARTOMER, US, Mn=192 g/mol, monofunctional), SR420 (SARTOMER, US, Mn=195 g/mol, monofunctional), MIRAMER CEA (MIWON, South Korea, Mn=144 g/mol, monofunctional), MIRAMER M1084 (MIWON, South Korea, Mn=184 g/mol, monofunctional), MIRAMER 1182 (MIWON, South Korea, Mn=162 g/mol, monofunctional).

**[Photoinitiator]**

As outlined above, the radiation curable composition according to the present invention further comprises one or more photoinitiators in a concentration range of 0.1 to 10 wt%, preferably in a concentration range of 0.1 to 7 wt% and more preferably in a concentration range of 0.1 to 5 wt%, e.g. 4 wt% with respect to the total weight of the composition. The one or more photoinitiator(s) are preferably selected from radical and/or cationic photoinitiators, radical photoinitiators being particularly preferred.

According to a preferred embodiment, the composition according to the present invention is free of cationic photoinitiators due to the significant post-reaction (so-called dark reaction) after terminated thermal/UV cure and the limited commercial availability.

According to a further preferred embodiment, the composition according to the present invention comprises only radical photoinitiators as photoinitiators due to the comparably low dark reaction and the large variety of commercially available radical photoinitiators. According to a particular preferred embodiment, the composition comprises one or more radical photoinitiator(s) in a concentration range of 0.1 to 8 wt%, preferably in an amount of 0.1 to 6 wt%, more preferably in a concentration range of 0.1 to 5 wt% and more preferably from 1 to 4.5 wt%, e.g. 4 wt% with respect to the total weight of the composition and is preferably free of any further, in particular cationic, photoinitiators. Preferably phosphine oxides and/or alpha-hydroxy-ketones are used as radical photoinitiator(s).

Suitable, commercially available compounds that may exemplary be employed as photoinitiators, alone or in combination, are OMNIRAD (IGM, Italy) photoinitiators, e.g.: OMNIRAD 184, OMNIRAD TPO, OMNIRAD 127, OMNIRAD ITX, OMNIRAD 819, GENOCURE (RAHN AG, Switzerland) photoinitiators, e.g.: GENOCURE ITX (RAHN AG), GENOCURE TPO (RAHN AG), GENOCURE TPO-L (RAHN AG), GENOCURE BP (RAHN AG), GENOCURE DETX (RAHN AG), GENOCURE CPK (RAHN AG), GENOCURE DMHA (RAHN AG), GENOCURE DEAP (RAHN AG), SPEEDCURE (LAMBSON-ARKEMA, UK) photoinitiators, e.g.: SPEEDCURE 84 (LAMBSON-ARKEMA), SPEEDCURE TPO (LAMBSON-ARKEMA), SPEEDCURE TPO-L (LAMBSON-ARKEMA), SPEEDCURE XKm (LAMBSON-ARKEMA), SPEEDCURE 97 (LAMBSON-ARKEMA), SPEEDCURE ITX (LAMBSON-ARKEMA) and so forth.

**[Further compounds]**

As outlined above, the radiation curable composition according to the present invention may optionally comprise further compounds. In embodiments, where pre-polymer(s) A, B, optionally C and the photoinitiators do not add up to 100 wt%, the composition comprises further compounds in a concentration of (100 wt% - wt% (A+B+C+ photoinitiators)). These further compounds are for example selected from one or more of pre-polymers (other than A, B, C), non-radically polymerizable/crosslinkable polymers, dispersing agents, polymer latexes, heat conductivity agents, radical scavengers (also known as polymerization inhibitors), light stabilizers such as UV-stabilizers, degassing additives, solvents, coloring agents, in particular pigments and dyes, fillers, in particular functional fillers comprising radically polymerizable groups on their surface, which are also considered as pre-polymer in the context of the present application, surfactants, synergists, catalysts, and rheology agents such as thickeners, without any limitation to these. Of course, other compounds that are known by a skilled person may be added to the composition according to the present invention.

According to a preferred embodiment, the composition according to the present invention further comprises one or more heat conductivity agents in a concentration range of 5 to 45 wt%, more preferable in the range of 10 to 40 wt%, even more preferably in the range of 10 to 30 wt% and most preferably in the range of 10 to 20 wt% (for example 15 wt%). In a particularly preferred embodiment, the composition according to present invention comprises one or more heat conductivity agent(s) in a concentration range of 15 to 45 wt%, preferably in a concentration range of 15 to 40 wt%, even more preferably in a concentration range of 15 to 30 wt% and most preferably in a concentration range of 15 to 20 wt% (e.g. 18 wt%). The one or more heat conductivity agent(s) are preferably selected from silicon carbide (SiC), boron nitride (BN), a carbon modification such as C-nanotubes, graphene, graphite and mixtures thereof. Preferably such heat conductivity agent(s) have a thermal conductivity of 2 to 5 W/mK, preferably 3 to 5 W/mK, more preferably 4 to 5 W/mK. Particularly preferred is the use of the above-mentioned heat conductivity agent(s) in form of nanoparticles, preferably in form of spherical or spherical-like nanoparticles. Non-spherical nanoparticles (e.g. fibers, or rod-shaped particles, as for example graphene, may be undesirably filtered out of the composition according to the present invention more easily, as for example by the filter of the printhead as compared to spherical nanoparticles. Such undesired filtration may on the one hand lead to a clogging of the filters and on the other hand to deteriorated heat conductivity of the cured composition. Suitable commercially available compounds that may exemplary be employed as heat conductivity agents, alone or in combination, are NC-0018-HP (BN, IoLiTec Nanomaterials, Germany) and NC-0002-HP (SiC, IoLiTec Nanomaterials, Germany).

According to a preferred embodiment, the composition comprises one or more radical scavengers in a concentration range of 0.2 to 1 wt%, preferably 0.3 to 1 wt%, more preferably 0.4 to 1 wt% and most preferably 0.5 to 1 wt% with respect to the total weight of the composition. Suitable commercially available compounds that may exemplary be employed as radical scavengers, alone or in combination, are Genorad 16, 18, 20, 21, 22, 23, 24, 26, (RAHN AG, Switzerland), 4-OH-TEMPO (e.g. from TRIGON CHEMIE, Germany) and WAKO Q-1301 (FUJIFILM, Japan).

It is also preferred that the composition further comprises one or more degassing additives, preferably in a concentration of at most 1.5 wt%, preferably at most 1 wt% and more preferably from 0.2 to 1 wt% with respect to the total weight of the composition. Suitable commercially available compounds that may exemplary be employed as degassing additive, alone or in combination, are BYK-088, BYK-1790, BYK-1798, BYK-A 535 (all supplied by BYK, Germany).

Preferably, the composition further comprises less than 5 wt%, preferably less than 1 wt% of solvents and more preferably is free of solvents, like alcohols, in particular polyols such as glycols, ketones, aldehydes, and aromatic/aliphatic hydrocarbons with respect to the total weight of the composition. This allows for facilitated manufacture, as solvents would need to be removed, e.g. by evaporation, which may lead to the formation of defects in the resulting printed objects and increases costs, as an additional manufacturing step is required. "Free of solvents" is understood to include small amounts of solvents which were not intentionally added.

Furthermore, one or more coloring agents (such as dyes and/or pigments) may be added to the composition. The coloring agent typically accounts for 0.1 to 5.0 wt%, preferably 0.5 to 4.5 wt%, more preferably 0.5 to 4.0 wt% and most preferably 0.5 to 3.0 wt% with respect to the total weight of the composition. In such embodiments, colored cured compositions may be obtained. It is noted that black, grey and white are considered as colors within the context of the present application. Preferably, such coloring agents are added to the composition by means of a coloring agent concentrate, comprising the respective coloring agent and typically suitable dispersants and optionally further compounds, such as pre-polymers, solvents and/or surfactants. In certain other embodiments, the composition according to the present invention is free of any coloring agent, resulting in colorless or even transparent cured compositions.

**[Further embodiments]**

According to a preferred embodiment of the composition according to the present invention, the radically polymerizable, unsaturated groups of pre-polymers A, B and/or (optionally) C comprise vinyl groups, allyl groups, (meth)acrylate groups or mixtures thereof, whereby vinyl and/or (meth)acrylate groups, preferably vinyl and/or acrylate groups, are particularly preferred; in such embodiments, it is further preferable if the functionality of the prepolymer(s) A and/or B is two, three or four, yet preferably two. In case the functionality is two, the typical terminal position of both unsaturated, radically polymerizable groups leads to less sterical hindrance as well as less stable radicals, which in turn leads to a faster reaction rate in the course of curing and thus ultimately to a higher curing degree and thus to a higher crosslinking density of the cured composition. Pre-polymer(s) having a functionality of higher than two (for example a functionality of three or four) tend to cause higher shrinkage upon curing due to an increased amount of cross-linking reactions in the course of the curing process. Pre-polymer(s) having a functionality of higher than four tend to cause too high shrinkage upon curing and thus cannot be used for certain embodiments of the composition according to the present invention, in particular in case a high dimensional accuracy is required.

According to a further preferred embodiment of the composition according to the present invention, the weight of the pre-polymers (A, B, optionally C and any further pre-polymers if present) per mol of radically polymerizable unsaturated groups ($WPU_p$) is from 100 to 200 g/mol, more preferably from 115 to 180 g/mol, even more preferably from 115 to 175 g/mol, yet even more preferably from 115 to 170 g/mol, more preferably from 115 to 165 g/mol, even more preferably from 115 to 160 g/mol and most preferably from 115 to 155 g/mol. In certain other embodiments, $WPU_p$ is from 130 to 180 g/mol, preferably from 130 to 175 g/mol, more preferably from 130 to 170 g/mol, yet more preferably from 130 to 165 g/mol, even more preferably from 130 to 160 g/mol and most preferably from 130 to 155 g/mol. And yet again in certain other embodiments $WPU_p$ is from 145 to 180 g/mol, preferably from 145 to 175 g/mol, more preferably from 145 to 170 g/mol, even more preferably from 145 to 165 g/mol and most preferably from 145 to 160 g/mol.

According to another preferred embodiment, the one or more pre-polymer(s) A and/or optionally C (if present) comprise and preferably consist of aliphatic pre-polymers. In such embodiments, cured compositions with improved flexibility may be obtained.

According to another preferred embodiment, the pre-polymers (A, B, optionally C and any further pre-polymers if present) account for at least 80 wt% with respect to the total weight of the composition. Embodiments having such a high amount of pre-polymers of at least 80 wt% lead to a high crosslinking density and thus typically to an increased glass transition temperature and HDT values, good mechanical properties and good chemical stability of the cured composition. Preferably the pre-polymers account for at least 85 wt% and more preferably for at least 90 wt% with respect to the total weight of the composition. In certain embodiments the pre-polymers account for 80 to 95 wt%, preferably for 85 to 95 wt%, more preferably 87 to 95 wt%, even more preferably 90 to 95 wt% e.g. 92, 93, 94 or 95 wt% with respect to the total weight of the composition.

According to a further preferred embodiment, the weight ratio of the one or more pre-polymer(s) A to the one or more pre-polymer(s) B is in the range of 1.0:1.5 to 1.5:1.0. It is further particularly preferred if the weight ratio of the one or more pre-polymer(s) A to the one or more pre-polymer(s) B is in the range of 1.0:1.2 to 1.2:1.0, preferably in the range of 1.0:1.1 to 1.1:1.0, e.g. 1.0:1.0. The shrinkage of the composition upon curing may be influenced by the content of the one or more pre-polymer(s) B and in particular the resulting ratio between the one or more pre-polymer(s) A to the one or more pre-polymer(s) B. Surprisingly, the use of higher amounts of the one or more pre-polymer(s) B and thus resulting ratios of A/B as given above showed reduced shrinkage upon curing of the composition according to the present invention. However, for certain applications, the content of the one or more pre-polymers(B) that may be added to the composition is limited, as such compounds typically cause an increase of the viscosity of the composition. The above given ratios of A/B turned out to be particularly suitable for inkjet 3D printing applications.

According to a further embodiment, in particular for inkjet 3D printing applications, the viscosity of the composition is at least 15 mPas at 50 °C. It is particularly preferred that the viscosity of the composition is in the range from 15 to 50 mPas, e.g. 45 mPas, preferably from 15 to 40 mPas, e.g. 35 mPas and more preferably from 15 to 30 mPas, e.g. 25 mPas, and most preferably from 20 to 30 mPas, all measured at 50 °C. Compositions having such a viscosity may be processed by various, commercially available printheads.

It may also be beneficial, in particular for inkjet 3D-printing applications, if the composition according to the present invention has a static surface tension in the range from 25 to 50 mN/m, e.g. 45 mN/m, preferably in the range from 25 to 40 mN/m, e.g. 28 mN/m, and more preferably from 30 to 40 mN/m, e.g. 35 mN/m at 25 °C. As compared to inkjet inks for typical decorative applications (e.g.: for printing of labels or graphics) a higher static surface tension proved to be advantageous for the building process during the 3D printing process as the drop spreads slower after its ejection/deposition onto the substrate, leading to more accurate dimensions, in particular on the edges (edge sharpness), and thus a higher resolution of the 3D printed object may be obtained.

Compositions according to the present invention may be obtained from standard preparation techniques of liquid compositions (e.g. by mixing, stirring, blending and so forth) as known by the skilled person, in particular known procedures for the preparation of inkjet inks or compositions for SLA additive manufacturing may be employed. For instance, compositions as described above may be obtained by bringing together the pre-polymers (for example pre-polymers A, B and optionally C, and further pre-polymer(s), if present, by mixing and dissolving them at 25 °C (at an ambient pressure of 1 atmosphere (atm)) until a homogenous mixture is obtained. In a second step the one or more photoinitiators and for example a dispersing agent and/or any further compounds (for example additives like radical scavengers, pigments and so forth) are added gradually into the mixture of pre-polymers and are further dissolved/dispersed at 25 °C (at 1 atm) until again a homogenous solution or at least a well dispersed mixture is obtained. Typically, solid components, such as pigments or non-soluble polymers, are brought into the mixture at higher shear forces as compared to liquid or soluble components.

Within the present application, an at least partially 3D printed object comprising a cured composition according to the present invention (or in other words: said composition in a cured state) is additionally provided. As previously mentioned, such an object may be obtained by processing the composition according to the present invention in an additive manufacturing process, in particular an SLA or inkjet 3D printing process, whereby it was found that such compositions are particularly suitable to be processed in an inkjet 3D printing process. Such objects may consist exclusively or only partly of the cured composition according to the present invention.

In particular for electronical applications, the breakdown voltage of the cured composition preferably is at least 40 kV/mm, more preferably at least 100 kV/mm. It is further preferable if the glass transition temperature (Tg) of the cured composition is at least 100 °C, preferably at least 110°C and more preferably at least 120 °C, e.g. 125 °C or even 140°C or 150°C, as electronical parts tend to heat up under working conditions. Surprisingly it was found that such high breakdown voltages and/or glass transition temperatures may be achieved by using and curing a composition according to the present invention. This favorable property of the cured composition makes it suitable, among other things, for use in electronical components, in particular for circuit boards, as for example short circuits between the conductor paths of an individual circuit board and/or in-between different circuit boards can be avoided due to the highly insulating, cured composition.

It is further preferable, if the heat deflection temperature (HDT-A) of the cured composition is at least 80 °C, preferably at least 100 °C, more preferably at least 120 °C, even more preferably at least 130 °C, as thereby deformation under mechanical stress at elevated temperature is reduced or even completely eliminated.

It also may be beneficial for certain applications if the tensile modulus of the cured composition according to the present invention is greater than 2 GPa and/or the stress at break of the cured composition is greater than 20 MPa, in particular for applications that require high mechanical toughness. It is particularly preferred if the tensile modulus of the cured composition according to the present invention is greater than 2.1 GPa, preferably greater than 2.5 GPa, more preferably greater than 2.7 GPa. Further, it is also preferred if the stress at break of the cured composition is at least 20 MPa, preferably at least 25 MPa, more preferably at least 30 MPa, for example 35 MPa.

An at least partially 3D printed object comprising a cured composition as described herein may consist entirely (100 wt% of the total object) or only partly (< 100 wt% of the total object) of the cured composition according to the present invention. According to a preferred embodiment, the at least partially 3D printed object comprises a cured composition as described herein, wherein preferably the composition is used as major building material of said object (> 50 wt%). It is preferred if more than 50 wt%, preferably more than 70 wt% and most preferably more than 90 wt% of the total object are made from a cured composition according to the present invention as described herein. The rest of the at least partially 3D printed object may for instance be formed from any other material, e.g: a carrier substrate, a conductive ink, a conductive material, in particular wire, fibers, in particular fiber mats, electronic parts like resistors, capacitors, diodes and so forth. In certain other embodiments, the object comprises a cured composition as described herein, wherein the composition is used as minor building material of said object (< 50 wt%). In such embodiments, the object may comprise less than 40 wt%, or less than 30 wt%, or even less than 20 wt% of the cured composition according to the present invention.

Further, a use of a composition as described herein in an additive manufacturing process, preferably in an ink-jet additive manufacturing process or in an SLA additive manufacturing process, is provided. Hereby, the composition is used as printing material. Compositions as described herein are particularly suitable to be used and thus processed via an additive manufacturing process and 3D-printed objects may thus be obtained. According to a particularly preferred embodiment, the additive manufacturing process to be used for processing a composition according to the present invention is an ink-jet additive manufacturing process. The obtainable 3D-printed object by using and curing the composition according to the present invention in an additive manufacturing process are at least partially cured. Such objects may consist exclusively or only partly of an at least partially cured composition according to the present invention. An obtainable object consisting only partly of an at least partially cured composition as described herein may for instance be obtained by printing the composition on a carrier substrate and thus obtaining an object consisting of the carrier substrate and the at least partially cured composition thereon. In such embodiments, good adhesion of the at least partially cured composition to the carrier substrate is of great importance.

According to a preferred embodiment, the composition as described herein is used for the manufacture of circuit boards by means of an additive manufacturing process, preferably by means of an inkjet 3D printing process. Circuit boards may be obtained by printing elements consisting of the at least partially cured composition onto a suitable carrier substrate (e.g. the base plate of the circuit board). Thereby, insulating elements/structures, surrounding conductor paths may be obtained.

Further obtainable 3D printed objects comprising or consisting of an at least partially cured composition according to the present invention may further be applied in sensor technology, in particular for *in-vivo* and *ex-vivo* sensors. As mentioned previously, surprisingly at least partially cured compositions according to the present invention featuring good biocompatibility could be realized, which is of high importance for *in-vivo* applications.

As mentioned previously, a 3D printed object comprising a cured composition as described herein is at least partially cured after the additive manufacturing process. In case of partial curing, the 3D printed object may be subjected to a post-curing process to further cure the 3D printed object. Apart from that, a post-treatment may also serve to improve the properties, in particular the mechanical properties and further in particular the isotropy of these respective properties in the x-,y- and z-direction of the printed object. For post-curing basically any kind of treatment that is capable to further cure the partially cured 3D printed object may be used provided that such treatment is capable of increasing the curing degree of the object. Care needs to be taken that such treatment does not cause a significant change of the dimensional accuracy of the object. It was found that post-treatments with heat and/or radiation, in particular UV-radiation, may be applied in order to achieve beneficial effects. However, depending on the printing process and the desired application of the object, a post-treatment may not be necessary.

Thus, a method of manufacturing an object comprising the at least partially cured composition as described herein via an additive manufacturing process is provided, said method comprising at least the following steps:

a) Using a composition as described herein in an additive manufacturing process, preferably an SLA or ink-jet additive manufacturing process;
b) obtaining an object comprising an at least partially cured composition; and
c) optionally subjecting the object obtained from step b) to a post-treatment process, preferably comprising a heat- and/or radiation treatment.

Preferably the curing degree of the at least partially cured composition is increased as compared to the curing degree of the composition comprised in the object obtained after step b) in the course of said post-treatment process.

Such a post-treatment process may comprise a heat treatment, in particular in a convection oven and/or infrared (IR) oven, or a radiation treatment, in particular UV-radiation treatment, or a combination thereof.

Surprisingly it was found, that by performing a post-treatment process, not only the curing degree and thus also the crosslinking density of the object could be increased, which resulted in an improvement of the properties of the at least partially cured compositions that are improved with increasing the curing degree as described previously herein, such as the Tg value, HDT value, chemical stability, mechanical properties and the biocompatibility, but also the isotropy of the mechanical properties of the at least partially cured composition could be improved. However, it is believed that these favorable effects may also be caused, at least to a certain extent, by a better coalescence of the printed cross-sections of the object, without any significant increase of the curing degree.

According to a preferred embodiment, the post-treatment process comprises a heat treatment, preferably via a convection oven at a temperature of at least 200 °C for at least 5 minutes and/or a radiation treatment, preferably a treatment with UV-radiation using a light source with a spectrum that matches the spectrum of the photoinitiator to induce the further curing reaction.

Exemplary post-treatment processes that may be employed, alone or in combination, without any limitation to these, are as follows:

- Heat treatment at 250 °C for 20 min in a convection oven; (e.g.: the 3D printed object is placed in a convection oven for 20 min, which is preheated to 250 °C and then the 3D printed object is taken out of the oven and cooled at room temperature (25°C at 1 atm)); and/or
- UV treatment with an undoped Mercury bulb (e.g. pureUV by Hönle, Germany, specific lamp power up to 240 W/cm with a dose of 2.5 J/cm$^2$ and a power of 1.5 W/cm$^2$).

-Brief description of the Figures-

**Figure 1** shows the chemical structure of 2-(2-Vinyloxyethoxy)ethyl methacrylate (VEEM). VEEM is a difunctional monomeric compound comprising a vinyl and a methacrylate group within the molecule. The number average molecular mass Mn is 200.23 g/mol (Mn = M for a monomeric compound). VEEM may for example be used as pre-polymer A.

**Figure 2** shows the chemical structure of 2-(2-Vinyloxyethoxy)ethyl acrylate (VEEA). VEEA is a difunctional monomeric compound comprising a vinyl and acrylate group within the molecule. The number average molecular mass Mn is 186.20 g/mol (Mn = M for a monomeric compound). VEEA may for example be used as pre-polymer A.

**Figure 3** shows the 1,10 relationship (a-carbon to $\alpha$-carbon) of 2-(2-Vinyloxyethoxy)ethyl methacrylate (VEEM), wherein the $\alpha$-carbons denote the inner (*endo*) carbon atoms of the terminal unsaturated C-C double bonds within the molecule. VEEM may for example be used as pre-polymer A.

**Figure 4** shows the chemical structure of tetrahydrofurfuryl acrylate. Tetrahydrofurfuryl acrylate is a monofunctional, monomeric compound comprising a single acrylate group within the molecule. The number average molecular mass Mn is 154 g/mol (Mn = M for a monomeric compound). This compound may for example be used as pre-polymer C.

**Figure 5** shows a chemical structure of an oligomeric, difunctional epoxy methacrylate compound comprising two methacrylate groups within the molecule. The compound is free of any epoxy groups and further comprises a bisphenol A structural unit. The number average molecular mass (Mn) is 1081 g/mol. Such compound may for example be used as pre-polymer B.

**Figure 6** shows a printed tensile bar (type 1A) by using a composition according to the present invention (Composition 1, see Table 2) in an inkjet 3D printing process. The tensile bar was then post-treated by thermal treatment as defined in the example section of the present application. Such tensile bars were used to determine the tensile modulus, stress at break and strain at break according to ISO 527-1:2019.

-Definitions and Measurement Methods-

Any definition shall be analogously applied to any deduction if a defined term given hereunder within the present application, e.g. the definition of "curing" shall be analogously be applied for the terms such as "curable", "cured" and the like. Further it is noted that any embodiment relating to the composition, the 3D object, the use of the composition or the manufacturing method of the composition and/or 3D object may be combined with any other embodiment as described herein, irrespective if such other embodiment concerns the composition, the 3D object, the use of the composition or the manufacturing method. Also, any disclosed parameter range is considered to disclose any contained subrange as well as any individual value within said parameter range and subrange.

If no measurement method is specified for a certain parameter/property, the measurement shall be performed according to the corresponding ISO standard for the measurement method of the respective parameter/property. If there is no ISO standard the measurement shall be performed according to corresponding EN standard of the measurement method. If there is no EN standard, the measurement shall be performed according to the corresponding national DIN standard (Germany). If there is no national DIN standard, the measurement shall be performed according to the corresponding national ONORM standard (Austria). If there is also no ONORM standard, the measurement shall be performed by the method that is considered as most appropriate by the skilled person.

If not specified otherwise herein, the standard to be used for a certain measurement is the one that was published latest before the application date of the present application.

If a measurement method is given incorrectly or incompletely herein, it is to be replaced by the corresponding standard in accordance with above ordering.

It is further noted that the terms "mass" and "weight" are used synonymously herein and are to be understood as referring to the physical value of mass and thus are given in units of mass (e.g.: gram (g) or kilogram (kg)).

**[Pre-polymer]** The term is to be understood as a compound which is capable of polymerization by reactive groups to a higher molecular weight polymer. For instance, reactive monomers, oligomers, polymers or any other polymerizable compounds are considered as pre-polymers herein.

**[Solvent]** The term is to be understood as non-polymerizable low molecular weight and liquid compound at standard conditions (1 atm, 25 °C).

**[Epoxy-based pre-polymer]** The term is to be understood as a pre-polymer being a reaction product of at least one epoxy (oxirane) functionalized compound and at least one further compound that is reactive with said epoxy group(s), e.g. epoxy acrylate oligomer as shown in Figure 5. Compounds, that were synthesized without any reaction involving epoxy groups, which chemical structure, however, are considered as typical for epoxy-based pre-polymers by the skilled person are also regarded as epoxy-based pre-polymers herein.

**[Radically polymerizable, unsaturated group]** The term is to be understood as a reactive group comprising at least one unsaturated moiety, e.g. a C-C double and/or triple bond, which is/are capable of being polymerized by a radical reaction mechanism, e.g. (meth)acrylate groups, vinyl groups, C-C triple bonds, allyl groups and the like.

**[Aliphatic]** The term is to be understood as non-aromatic according to Hückel's rule. An aliphatic compound is free of any aromatic moiety according to Hückel's rule. Compounds with non-aromatic double and triple bonds are thus also considered as aliphatic compounds.

**[Curing]** The term is to be understood as the formation of a polymer from thermosetting/curable components, such as pre-polymers by e.g. chemical crosslinking.

**[Weight percentage (wt%)]** If not stated otherwise within the present application, this term is to be understood to refer to the weight percentage of a specific compound with respect to the total weight of the composition.

**[Heat conductivity agent]** A heat conductivity agent is to be understood as a compound that significantly increases the heat conductivity of a (at least partially cured) composition, when present in the composition, as compared to a composition without a heat conductivity agent.

**[Functionality]** The functionality is the number of unsaturated, radically polymerizable groups per molecule of a pre-polymer. The functionality may be one (monofunctional pre-polymer), two (bifunctional pre-polymer), three (trifunctional pre-polymer), four (tetrafunctional pre-polymer) and so forth.

**[Weight of the pre-polymers per mol of radically polymerizable unsaturated groups (WPU$_p$)]**

The weight of the pre-polymers per mol of radically polymerizable unsaturated groups is a measure for the density of reactive (= radically polymerizable), unsaturated functional groups within the composition. The lower the WPU$_p$ value, the higher the expected crosslinking density of the cured composition.

The calculation of WPU$_p$ is further illustrated by means of the following formula for a composition comprising y pre-polymers (e.g. y= 1,2,3,4 and so forth). In below formula, $m_i$ denotes the total mass of $i^{th}$ pre-polymer within the composition and $n_i$ denotes the total moles of radically polymerizable, unsaturated groups contained in the total mass of the $i^{th}$ pre-polymer.

$$WPU_p\left[\frac{g}{mol}\right] = \frac{\sum_{i=1}^{y} m_{i,}}{\sum_{i=1}^{y} n_{i,}}$$

An exemplary calculation of WPU$_p$ of Composition 1 as given in Table 2, comprising only two different kinds of pre-polymers (y=2), namely VEEA (pre-polymer A, $M_n$ = 186 g/mol) and CN 104 (pre-polymer B, $M_n$ = 900 g/mol) is given below; $M_i$ denotes the molar mass (or $M_n$ if applicable) of the $i^{th}$ pre-polymer and $f_i$ denotes the functionality of the $i^{th}$ pre-polymer ($f_A$ = $f_B$ = 2).

$$WPU_p = \frac{m_A + m_B}{n_A + n_B}$$

$$m_A + m_B = 48g + 47g = 95g$$

$$n_A + n_B = \frac{m_A}{M_A} * f_A + \frac{m_B}{M_B} * f_B = \frac{48g}{186\frac{g}{mol}} * 2 + \frac{47g}{900\frac{g}{mol}} * 2 = 0.62 \text{ mol}$$

$$WPU_p = \frac{47g+48g}{0.62 \text{ mol}} = 153.1 \text{ g/mol}$$

**[Number average molecular mass ($M_n$)]** The number average molecular mass is defined by the formula given below and can be determined by various methods known by the skilled person; For monomeric compounds $M_n$ is equal to the molecular (molar) mass (M) of such compound. In below formula, $M_i$ denotes the molecular mass of the $i^{th}$ molecule within the sample and $N_i$ denotes the number of molecules having the molecular mass $M_i$.

$$M_n = \frac{\sum_{i=1}^{z} N_i M_i}{\sum_{i=1}^{z} N_i}$$

The number average molecular mass (Mn) of non-monomeric compounds is determined by gel permeation chromatography (SECurity2 GPC System, as available from PSS-Polymer (Germany)) against polyacrylate standards. Tetrahydrofuran (THF) is employed as eluent.

**[Glass transition temperature (Tg)]** The glass transition temperature (Tg) is the gradual transition from an amorphous or (semi)crystalline material from a hard and brittle (glassy) state into a rubbery, entropy-elastic state. The glass transitions temperature (Tg) of an at least partially cured composition or of an individual compound (e.g. epoxy based pre-polymer B) is determined by differential scanning calorimetry (DSC) using a NETZSCH (Germany), DSC 204 F1 Phoenix in accordance to ISO 11357-2:2014 using a heating/cooling rate of 20 °C/min (10-15 mg sample weight). The Tg is determined by evaluating the point of inflection of the endothermal step (only endothermal steps above 0 °C are being considered). The following temperature program is used for the determination of the Tg (see Table 1a):

*Table 1a - Temperature program for DSC measurements*

| Step # | Mode | Temperature [°C] | Heating/cooling rate [K/min] | Time [hh:mm] |
|---|---|---|---|---|
| 0 | Start | 25 | | |
| 1 | Dynamic | 80* | 20 | 00:03 |
| 2 | Isotherm | 80* | | 00:01 |
| 3 | Dynamic | -25 | 20 | 00:05 |
| 4 | Isotherm | -25 | | 00:02 |
| 5 | Dynamic | 250 | 20 | 00:14 |

**[Heat deflection temperature (HDT)]** The heat deflection temperature, also known as heat distortion temperature, is the temperature at which a polymeric sample deforms under a specified flexural stress. The HDT is determined with a VIC-2450 machine from Zwick Roell (Germany) according to ISO 75-2:2013, wherein method A of said standard is employed and referred to exclusively herein. Method A (HDT-A) employs a flexural stress of 1.80 MPa. So any reference to an HDT value is a reference to an HDT-A value.

**[Viscosity]** Composition: The viscosity of the radiation curable composition according to the present invention is determined at 50 °C (at 1 atm) (typically slightly above the operating temperature of common industrial printers) by a rotational viscometer Brookfield DV2T Extra (Brookfield Ametek, US) equipped with ULA (ultra low adapter for low viscosity compounds/compositions, Brookfield Ametek) equipped with a water jacket for precise sample temperature control connected with the temperature control bath. The viscosity was measured at a rotating speed of 25 rpm. Further, the viscosity is also measured at a rotating speed of 5, 10, 15, 20, 25, 30, 35, 40, 45, and 50 rpm to confirm Newtonian behavior of the composition at 25 rpm. The measurement is performed according to DIN 53019-1:2008.

Individual compounds: The viscosity of individual compounds of the composition according to the present invention is determined at 25 °C (at 1 atm) by a rotational viscometer Brookfield DV2T Extra equipped with a SSA (small sample adapter for high viscosity compounds, Brookfield Ametek) equipped with a water jacket for precise sample temperature control connected with the temperature control bath. The viscosity was measured at a rotating speed of 25 rpm. Further, the viscosity is also measured at a rotating speed of 5, 10, 15, 20, 25, 30, 35, 40, 45, and 50 rpm to confirm Newtonian behavior of the compound at 25 rpm. For low-viscosity compounds, also a ULA adapter may be used. The skilled person is capable of choosing the correct adapter for the respective measurement. The measurement is performed according to DIN 53019-1:2008.

Further information regarding the choice of the correct adapter for a respective sample may also be found from the user manual of the device.

[Biocompatibility] The biocompatibility was tested by using cell line L929 of the species murine (mouse) according to ISO 10993-5:2009.

[Chemical resistance] The chemical resistance was tested according to ISO 2812-3:2019 for 24 hours. The optical change of the surface of the printed object comprising the at least partially cured composition according to the present invention after 24h exposure to a certain chemical at a temperature of 25 °C is determined according to ISO 4628-1:2016. The following Table 1 explains the evaluation scheme:

Table 1: Evaluation scheme for the chemical resistance test according to ISO 4628-1:2016.

| 0 | none, i.e. no detectable defects |
|---|---|
| 1 | very few, i.e. small, barely significant number of defects |
| 2 | few, i.e. small but significant number of defects |
| 3 | moderate number of defects |
| 4 | considerable number of defects |
| 5 | dense pattern of defects |

[Static surface tension] The static surface tension was determined at 25 °C (at 1 atm) using a Processor-Tensiometer K100MK2 by KRÜSS (Germany) and the plate method according to DIN-EN-14370:2004.

[Break down voltage] The breakdown voltage was measured according to DIN EN 60243-1:2014.

[Mechanical properties] The mechanical properties (tensile modulus, stress at break and strain at break) of the 3D printed objects were measured according to DIN EN ISO 527-1:2019 on a Shimadzu AGS-X (Japan) universal testing machine equipped with a load cell of 10 kN at 25°C and 1 atm. Tensile type 1A specimens were used and the clamping length was set to 115 mm. The crosshead speed was 5 mm/min for the determination of the tensile modulus, which was obtained by linear regression in the strain range between 0.1 and 0.25 %. After reaching 0.25 % strain, the crosshead speed was increased to 50 mm/min for the remainder of the test.

-Examples-

Compositions 1, 2 and 3 are compositions in accordance with the present invention.

[Composition preparation] The preparation of compositions 1, 2 and 3 was performed at 25 °C and 1 atm. In a first step the respective components #1 to #9 (see Table 2) were brought together in a first vessel and mixed by using a dissolver (IKA EUROSTAR Power Control-Visc 6000 Mixer, IKA, Germany) for 2 hours by applying a rotating speed of 1000 rpm until a homogenous mixture was obtained. At this stage, the preparation of compositions 1 and 3 was completed. For composition 2, the pigment concentrate (#10) was then put into a second vessel and the respective homogenous mixture

of components #1 to #9 was added under stirring with high shear forces for 2 hours by applying a rotating speed of 1000 rpm (IKA EUROSTAR Power Control-Visc 6000 Mixer) to disperse the pigment particles of the pigment concentrate homogenously in the composition, thereby finishing the preparation of composition 2. It is noted that the pigment concentrate black (see Table 3) comprises an amount of pre-polymer C of 65.7 wt% (SR 531) with respect to the total weight of the pigment concentrate black, and thus composition B comprises 2.6 wt% of pre-polymer C with respect to the total composition.

*Table 2 - Formulations of Composition 1, Composition 2 and Composition 3*

| # | Compound | Description/properties | Composition 1 [wt%] | Composition 2 [wt%] | Composition 3 [wt%] |
|---|---|---|---|---|---|
| 1 | VEEA, Pre-polymer A (NIPPON SHOKUBAI) | $M_n$ = 186 g/mol Functionality = 2 monomer | 48.0 | 48.0 | 65 |
| 2 | CN 104, Epoxy-based pre-polymer B (Sartomer) | $M_n$ = 900 g/mol Functionality =2 oligomer | 47.0 | 43.0 | 25 |
| 3 | SR285, Pre-polymer C (Sartomer) | $M_n$ = 154 g/mol Functionality = 1 monomer | 0 | 0 | 5 |
| 4 | Genorad 16 (RAHN AG) | polymerization inhibitor | 0.2 | 0.2 | 0.2 |
| 5 | BYK 088 (BYK) | Degassing additive | 0.65 | 0.65 | 0.65 |
| 6 | WAKO Q-1301 (Fujifilm) | polymerization inhibitor | 0.05 | 0.05 | 0.05 |
| 7 | Irgacure 184 (Ciba) | photoinitiator | 2.0 | 2.0 | 2.0 |
| 8 | 4-Hydroxy-TEMPO (Ciba) | polymerization inhibitor | 0.1 | 0.1 | 0.1 |
| 9 | Irgacure TPO (Ciba) | photoinitiator | 2.0 | 2.0 | 2.0 |
| 10 | Pigment concentrate black | see Table 3 | 0 | 4.0 | 0 |
| | Sum | - | 100 | 100 | 100 |
| | $WPU_p$ [g/mol] | - | 153.1 | 149.8 | 120.7 |
| | Viscosity at 50 °C [mPa.s] | - | 25.0 | 21.0 | 17.0 |
| | Surface tension at 25C° [mN/m] | - | 36.0 | 34.5 | 36.0 |

**[Pigment concentrate black preparation]** The preparation of the pigment concentrate black was performed at 25 °C and 1 atm. In a first step, components #11, #12, #13 and #14 (see Table 3) were brought together and dispersed for 2 hours by applying a rotating speed of 1000 rpm until a homogenous mixture was obtained (IKA EUROSTAR Power Control-Visc 6000 Mixers, IKA, Germany). In a second step, the pigment (#16) and the pigment synergist agent (#15) were added and predispersed under high shear forces in a dissolver (IKA EUROSTAR Power Control-Visc 6000 Mixers, IKA, Germany) for 30 minutes by applying a rotating speed of 1000 rpm. In a last step, the acrylate (#17) was added to reduce the viscosity of the mixture in order to enable a grinding process in a bead mill (Dyno Mill, Multi Lab, Willy A. Bachofen AG). The pigment concentrate was grinded in a bead mill by applying a rotating speed of 4000 rpm for 3 hours until a desired D50 distribution of the particle size (for example 120 nm for black pigments) and/or specific L.a.b values (CIELAB color space) were reached. The so obtained pigment concentrate black was then used for preparation of composition 2.

*Table 3 - Formulation of pigment concentrate black*

| # | Component | Description | Pigment concentrate [wt%] |
|---|---|---|---|
| 11 | TEGO DISPERSE 685 (Evonik) | Wetting and dispersing agent | 6.00 |
| 12 | SOLSPERSE 24000 SC (Lubrizol) | Polymeric dispersant | 2.00 |
| 13 | SARTOMER SR 531 (Sartomer), pre-polymer C | $M_n$ = 200 g/mol Functionality = 1 monomer Cyclic trimethylolpropane formal acrylate | 26.08 |
| 14 | WAKO Q-1301 (Fujifilm) | Nitrosamine-Inhibitor | 0.05 |
| 15 | Solsperse 5000S (Lubrizol) | Pigment synergist agent | 2.30 |
| 16 | SPEZIALSCHWARZ 250 (Evonik) | Pigment schwarz | 24.00 |
| 17 | SARTOMER SR 531 (Sartomer), pre-polymer C | $M_n$ = 200 g/mol Functionality = 1 monomer Cyclic trimethylolpropane formal acrylate | 39.57 |

(continued)

| # | Component | Description | Pigment concentrate [wt%] |
|---|---|---|---|
|  | Sum | - | 100 |

Alternatively, commercially available pigment concentrates (for example sold by CABOT, UK or FUJIFILM, Japan or Sun Chemical, UK as e.g. Jetsperse UV Black 7 UVDJ207 or Jetsperse UV Yellow 150 UVD-S350) may be used to manufacture the composition, in particular an ink, according to the present invention.

[3D printing / post-treatment] A laboratory test printing station was used for all the 3D printing tests. The composition is jetted at 75 °C using a Konica Minolta (KM) 512 print head. Tensile type 1A specimens according to EN ISO 527-1:2019 were printed. In case a post-treatment process was used, the following procedure(s) were applied to the printed tensile bars:

Heat treatment at 250 °C for 20 min in a convection oven (= "thermal treatment"); the 3D printed object is placed in a convection oven for 20 min, which is preheated to 250 °C, then the 3D printed object is taken out of the oven and cooled at room temperature (25 °C at 1 atm); and/or

UV treatment with an undoped Mercury bulb (e.g. pureUV by Hoenle, Germany, specific lamp power up to 240 W/cm) with a dose of 2.5 J/cm$^2$ and a power of 1.5 W/cm$^2$ (= "UV-treatment").

[Breakdown voltage] The result of the breakdown voltage measurement is given in Table 4 below:

Table 4: Break down voltage of printed samples

|  | Break down voltage [kV/mm] |
|---|---|
| Composition 1, post-treated with thermal treatment | 148 |

[Biocompatibility] The results of the biocompatibility measurements are given in Table 5 below:

Table 5: Biocompatibility of printed samples

|  | Biocompatibility |
|---|---|
| Composition 1, post-treated with thermal treatment | YES |

[Mechanical properties] The mechanical characterization of the printed and optionally post-treated objects was carried out using a commercially available tensile test facility (Shimadzu AGS-X (Japan) universal testing machine equipped with a load cell of 10 kN). The following Table 6 shows the determined mechanical properties of the tensile bars. Based on the tensile test, the tensile modulus, stress at break and strain at break were determined according to EN ISO 527-1:2019. The obtained mean values and standard deviations are given below:

Table 6: Tensile properties of 3D printed objects

|  | Tensile modulus [GPa] | Stress at break [MPa] | Strain at break [%] |
|---|---|---|---|
| Composition 1, non-post-cured (7 measurements) | 2.82 +/- 0.07 | 28.71 +/- 6.30 | 1.08 +- 0.27 |
| Composition 1, post-treated with UV treatment (3 measurements) | 2.41 +/- 0.06 | 29.58 +/- 5.21 | 1.41 +- 0.41 |
| Composition 1, post-treated with UV + thermal treatment (4 measurements) | 2.60 +/- 0.13 | 36.68 +/- 9.10 | 1.60 +/- 0.50 |

[Chemical resistance] The results of the chemical resistance tests are given in Table 7 below:

*Table 7: Chemical resistance of 3D printed objects*

|  | Salt water | Aq. HCl (10%) | Aq. NaOH (5%) | Isopropanol |
|---|---|---|---|---|
| Composition 1, post-treated with thermal treatment | 0 | 0 | 0 | 0 |

**[Glass transition temperature]** The results of the glass transition temperature (Tg) measurements are given in Table 8 below:

*Table 8: Glass transition temperature of 3D printed objects*

|  | Glass transition temperature [°C] |
|---|---|
| Composition 1, non-post-treated | 62 |
| Composition 1, post-treated with thermal treatment | 125 |

**[Heat deflection temperature]** The results of the heat deflection temperature (HDT) measurements are given in Table 9 below:

*Table 9: Heat deflection temperature (HDT) of 3D printed objects*

|  | Heat deflection temperature (HDT-A) [°C] |
|---|---|
| Composition 1, post treated with thermal treatment | 88 |

**Claims**

1. A radiation curable composition for use in additive manufacturing comprising

    i. one or more pre-polymers A with a number average molecular mass (Mn) of below 600 g/mol with at least two radically polymerizable, unsaturated groups per molecule, the one or more pre-polymers A being present in a concentration range of 25 wt% - 70 wt% with respect to the total weight of the composition;
    ii. one or more epoxy-based pre-polymers B with a number average molecular mass (Mn) of at least 600 g/mol with at least two radically polymerizable, unsaturated groups per molecule, the one or more epoxy-based pre-polymers B being present in a concentration range of 25 wt% - 70 wt% with respect to the total weight of the composition;
    iii. optionally one or more pre-polymers C with one radically polymerizable, unsaturated group per molecule, the one or more pre-polymers C being present in a concentration of below 25 wt% with respect to the total weight of the composition;
    iv. one or more photoinitiators in a concentration range of 0.1 wt% - 10 wt% with respect to the total weight of the composition; and
    v. optionally further compounds,

    wherein the weight of the pre-polymers per mol of radically polymerizable unsaturated groups ($WPU_p$) is from 100 to 500 g/mol.

2. A composition according to any of the preceding claims, **characterized in that** said radically polymerizable, unsaturated groups of pre-polymers A, B and/or C comprise vinyl groups, allyl groups, (meth)acrylate groups or mixtures thereof.

3. A composition according to any of the proceeding claims, **characterized in that** the weight of the pre-polymers per mol of radically polymerizable unsaturated groups ($WPU_p$) is from 100 to 200 g/mol.

4. A composition according to any of the preceding claims, **characterized in that** the pre-polymers A and/or C are aliphatic pre-polymers.

5. A composition according to any of the preceding claims, **characterized in that** the pre-polymers account for at least 80 wt% with respect to the total weight of the composition.

6. A composition according to any of the preceding claims, **characterized in that** the weight ratio of pre-polymer A to pre-polymer B is in the range of 1.0:1.5 to 1.5:1.0.

7. A composition according to any of the preceding claims, **characterized in that** the one or more pre-polymers A comprise at least one (meth)acrylate group and at least one vinyl group per molecule.

8. A composition according to any of the preceding claims, **characterized in that** the one or more pre-polymers A comprise 2-(2-vinyloxyethoxy)ethyl(meth)acrylate (VEEA/VEEM).

9. A composition according to any of the preceding claims, **characterized in that** the one or more epoxy-based pre-polymers B comprise at least two (meth)acrylate groups per molecule.

10. A composition according to any of the preceding claims, **characterized in that** the composition comprises one or more heat conductivity agents.

11. A composition according to any of the preceding claims, **characterized in that** the viscosity of the composition is at least 15 mPas at 50 °C as measured according to the method given in the description.

12. An at least partially 3D printed object comprising a cured composition according to any of claims 1-11.

13. A method of manufacturing an object comprising an at least partially cured composition via an additive manufacturing process, said method comprising at least the following steps:

    a. Using a composition according to any one of claims 1-11 in an additive manufacturing process, preferably a stereolithography (SLA) or ink-jet additive manufacturing process;
    b. obtaining an object comprising an at least partially cured composition; and
    c. optionally subjecting the object obtained from step b) to a post-treatment process, said post-treatment process preferably comprising a heat- and/or radiation treatment.

14. Use of a composition according to any one of claims 1-11 in an additive manufacturing process, preferably an ink-jet additive manufacturing process or a stereolithography (SLA) additive manufacturing process.

15. Use of a composition according to any one of claims 1-11, of a method according to claim 13 or of an additive manufacturing process according to claim 14 for the manufacture of circuit boards or sensors.

Fig. 1 – VEEM, pre-polymer A

Fig. 2 – VEEA, pre-polymer A

Fig. 3 – 1,10 relationship of VEEM

Fig. 4 – Tetrahydrofurfuryl acrylate, pre-polymer C

Fig. 5 – Oligomeric, difunctional epoxy acrylate compound, pre-polymer B

Fig. 6 – 3D inkjet ink printed tensile bar of type 1A produced from Composition 1

**Europäisches Patentamt**
**European Patent Office**
**Office européen des brevets**

# EUROPEAN SEARCH REPORT

**Application Number**
EP 21 17 5852

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2012 227190 A (NIPPON CATALYTIC CHEM IND) 15 November 2012 (2012-11-15) * example 7; table 1 * | 1-12 | INV. B33Y70/00 B29C64/00 C09D11/101 |
| X | US 2012/029107 A1 (BERENS ULRICH [DE] ET AL) 2 February 2012 (2012-02-02) * application examples * * paragraphs [0094], [0158] * | 1-6,9-15 | C09D11/30 |
| A | US 2020/115578 A1 (WANG LIKUN [CN]) 16 April 2020 (2020-04-16) * example 5 * | 1,12,13, 15 | |
| A | JP 2016 196135 A (SEIKO EPSON CORP) 24 November 2016 (2016-11-24) * examples; paragraph [0071]; claims 1, 3; tables 2, 3 * | 1,12,13, 15 | |
| A | US 2018/206342 A1 (TORFS RITA [BE] ET AL) 19 July 2018 (2018-07-19) * examples; claims 16, 27, 29 * | 1,12,13, 15 | TECHNICAL FIELDS SEARCHED (IPC) B33Y B29C C09D |

The present search report has been drawn up for all claims

| Place of search | Date of completion of the search | Examiner |
|---|---|---|
| Munich | 4 November 2021 | Haider, Ursula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 17 5852

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2021

| Patent document cited in search report | | Publication date | Patent family member(s) | | Publication date |
|---|---|---|---|---|---|
| JP 2012227190 | A | 15-11-2012 | NONE | | |
| US 2012029107 | A1 | 02-02-2012 | EP | 2411359 A1 | 01-02-2012 |
| | | | ES | 2621939 T3 | 05-07-2017 |
| | | | JP | 5650196 B2 | 07-01-2015 |
| | | | JP | 2012521386 A | 13-09-2012 |
| | | | JP | 2015038087 A | 26-02-2015 |
| | | | KR | 20120003896 A | 11-01-2012 |
| | | | US | 2012029107 A1 | 02-02-2012 |
| | | | WO | 2010108862 A1 | 30-09-2010 |
| US 2020115578 | A1 | 16-04-2020 | CN | 107513309 A | 26-12-2017 |
| | | | EP | 3626789 A1 | 25-03-2020 |
| | | | JP | 6916375 B2 | 11-08-2021 |
| | | | JP | 2020528018 A | 17-09-2020 |
| | | | US | 2020115578 A1 | 16-04-2020 |
| | | | WO | 2019024580 A1 | 07-02-2019 |
| JP 2016196135 | A | 24-11-2016 | NONE | | |
| US 2018206342 | A1 | 19-07-2018 | CN | 107852825 A | 27-03-2018 |
| | | | EP | 3119170 A1 | 18-01-2017 |
| | | | JP | 2018529220 A | 04-10-2018 |
| | | | KR | 20180027595 A | 14-03-2018 |
| | | | US | 2018206342 A1 | 19-07-2018 |
| | | | WO | 2017009097 A1 | 19-01-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8609204 B2
- EP 3322577 A1
- EP 3166774 A1
- US 10688715 B2
- US 20210008793 A1
- WO 2020035456 A1
- WO 2019025717 A1

- WO 2019071071 A1
- EP 3371263 B1
- WO 2020136654 A1
- EP 0822445 A1
- US 20180320008 A1
- KR 20200128598 A
- WO 2020081791 A1

**Non-patent literature cited in the description**

- **DAVID BIRD et al.** *The Minerals, Metals & Materials Society,* 2019